# EUROPEAN PATENT SPECIFICATION

(11) **EP 2 671 704 B1**
(45) Date of publication and mention of the grant of the patent: **24.06.2015**
(21) Application number: 13170667.3
(22) Date of filing: 05.06.2013
(51) Int. Cl.: B29C 49/42, B65G 47/84, B65G 47/28

(54) **System for spacing and transferring objects between operative stations**
System zur Übergabe und Beabstandung von Objekte zwischen operativen Stationen
Systeme de transfert et espacement d'object entre stations opératives

(30) Priority: 07.06.2012 IT MI20120991
(43) Date of publication of application: 11.12.2013
(73) Proprietor: SMI S.p.A., 24121 Bergamo (IT)
(72) Inventor: Zacche', Vanni, I-24121 BERGAMO (IT); Salvi, Giorgio, I-24121 BERGAMO (IT); Grazioli, Marco, I-24121 BERGAMO (IT)
(74) Representative: Long, Giorgio

(56) References cited:
- DE-A1-102008 037 865
- FR-A1- 2 515 153
- US-A- 6 152 723

## Description

The present invention relates to a system for spacing and transferring objects between operative stations. In particular, the invention is applied to an oven for preforms in plastic material, usable moreover, without limitation, in blowing or stretch-blowing machines. Obtaining containers by blowing of special preforms suitably heated within a mould having a desired shape is a widely used technique in the packaging field, in particular for manufacturing bottles for beverages. There are substantially two different techniques, simple blowing and stretch-blowing, providing for the pneumatic blowing and the concomitant mechanical stretching of the preform in the mould. In both cases, the preforms have to reach the blowing or stretch-blowing machine in a thermal condition corresponding to the softening point of the material, so as to be able to be plastically deformed within the moulds.

Softening of preforms is carried out in special ovens, which comprise a series of heating modules arranged in series along the path of the preforms.

In order to maximize both the thermal efficiency and the dimensions of the oven, it is desired that the preforms are introduced and made to slide within the oven at the closest pitch as possible.

However, this need is opposite the need that the heated preforms are suitably spaced for their insertion into the moulds of the blowing or stretch-blowing machine, the pitch of which, due to obvious dimensioning reasons, cannot be reduced beyond a given limit.

In the conventional machines as known for example from DE-10/2008/037,865 and FR-A-2,515,153, this operation of spacing the preforms to the pitch of the moulds is carried out by handling means, in particular distribution stars, comprising a plurality of preform gripping means that are arranged at the same pitch of the moulds in the blowing machine or at an intermediate between pitch the latter and the pitch of the preforms exiting the oven. Therefore, the distribution stars are arranged in rotation at a speed larger than the feeding speed of the heated preforms, and lower or equal to the rotation speed of the blowing machine.

This speed change imposes a considerable acceleration to the preforms. When considering that the latter one, when they exit the oven, are not rigid, but softened, such acceleration may cause a deformation of the preforms, with a consequent formation of imperfections in the obtained bottles after the blowing or stretch-blowing operation. In fact, the deformed preform may contact the mould surface before starting to blow, causing an abrupt cooling of the preform at the contact point, which thus will not be able anymore to undergo an expansion.

It shall be also noticed that the diameter of the distribution stars and/or the pitch of the gripping means located thereon is not fixed, depending on the type of the machine. This fact further increases the problem related to transfer the softened preforms from the oven to the distribution stars, which transfer will be not able to be ever performed in homokinetic conditions. In the case when the distribution star diameter is lower and thus the latter is spaced to the release means of the preforms from the oven, the preforms will be subjected to a two-component acceleration: a tangential component for the spacing thereof at the pitch of the star, and a radial component during the transferring step from the oven to the star. This combined acceleration is particularly detrimental, easily causing a deformation of the preforms.

The problem addressed by the present invention is to provide a system for spacing and transferring of object, in particular preforms, which allows overcoming the above-mentioned drawbacks.

Such problem is solved by a system for spacing and transferring objects as set forth in the appended claims, the definition of which are an integral part of the present description.

Further characteristics and advantages of the present invention will be more clearly apparent from the description of some implementation examples, given herein below by way of indicative, non-limiting example, with reference to the following Figures:
Fig. 1 represents a plan schematic view of an oven-blowing machine assembly according to the invention;
Fig. 2 represents a perspective partial view of the system for spacing and transferring objects according to the invention;
Fig. 2A represents a view of a detail of the system of

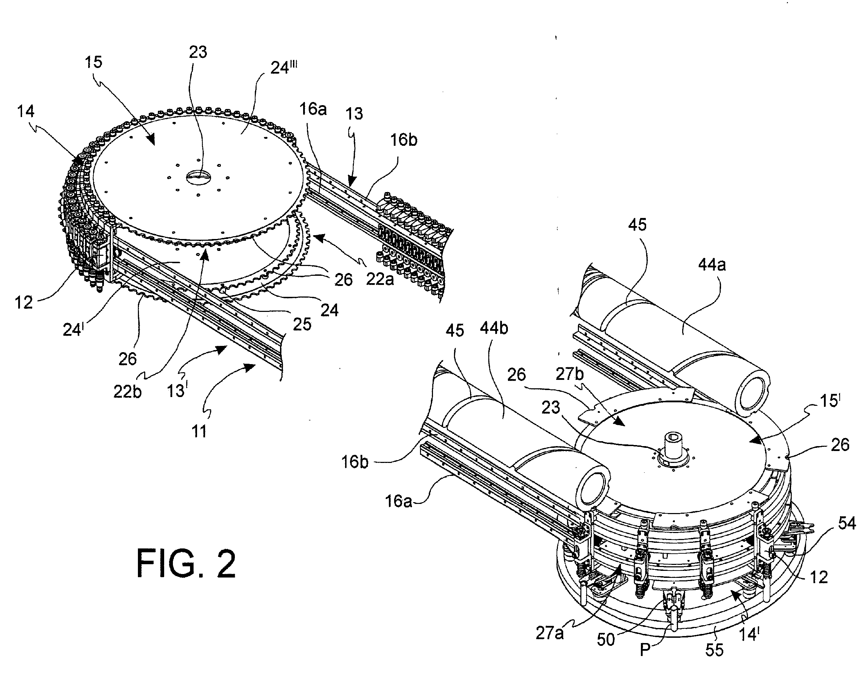

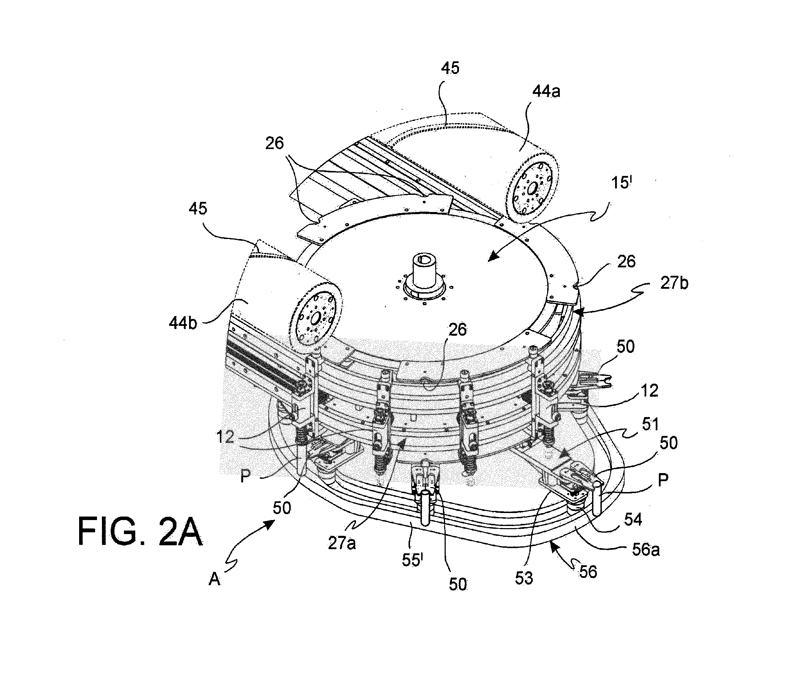

Fig. 2, according to a different embodiment;

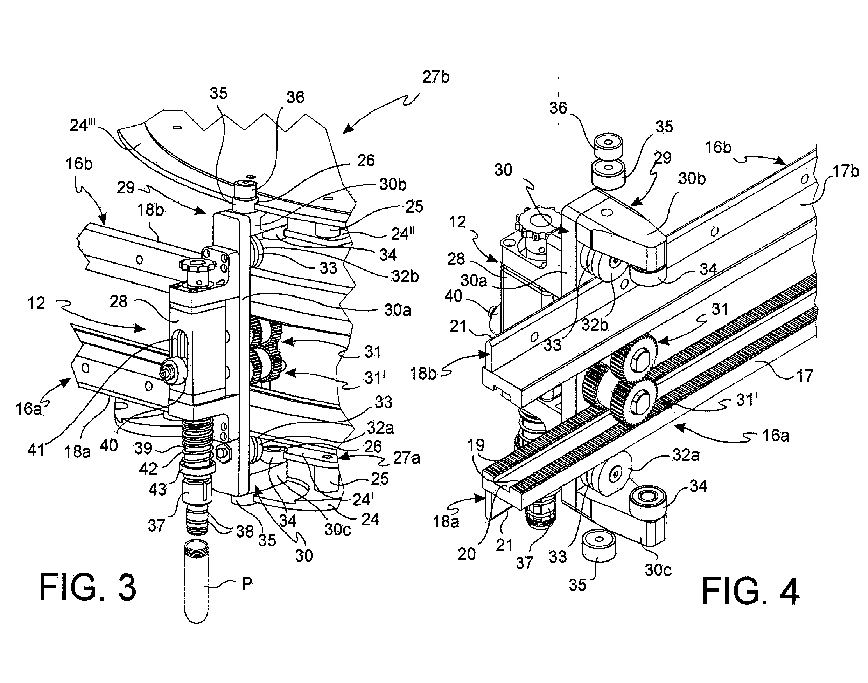

Fig. 3 represents a perspective view of a detail showing a mandrel of the system of Fig. 2;
Fig. 4 represents a different perspective view of a particular detail showing the mandrel of Fig. 3 in a different operative position;

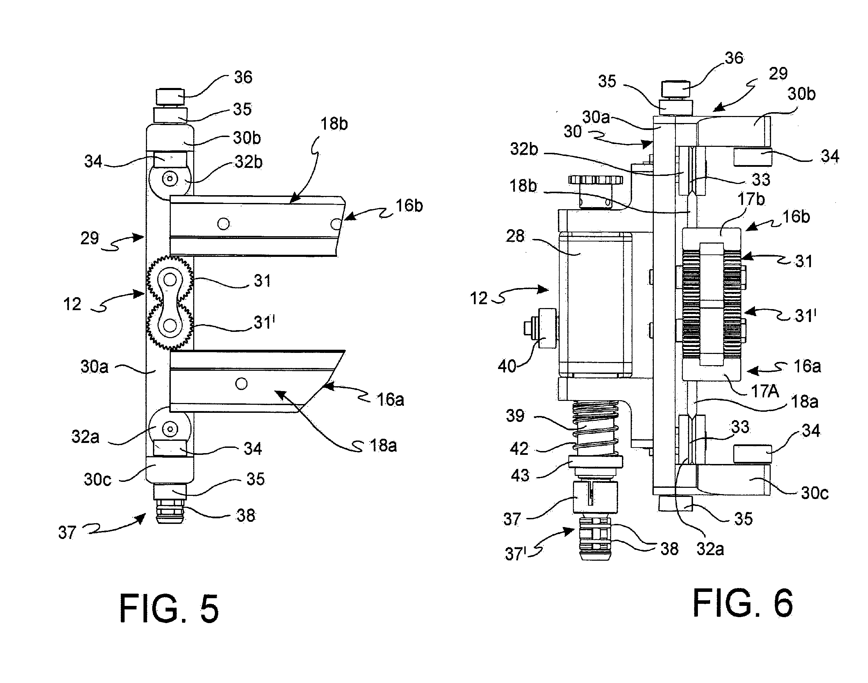

Fig. 5 represents a side view according to the direction A of Fig. 4;
Fig. 6 represents a side view secondo the direction B of Fig. 4;

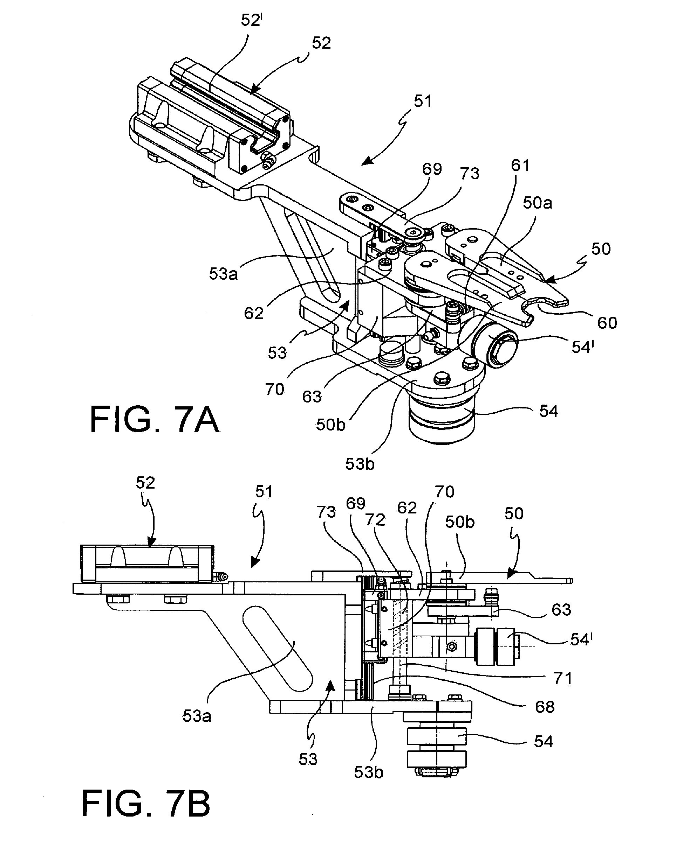

Fig. 7A shows a perspective view of the particular of a plier of the system for spacing and transferring objects of the invention;
Fig. 7B shows a side view of the plier of Fig. 7A;

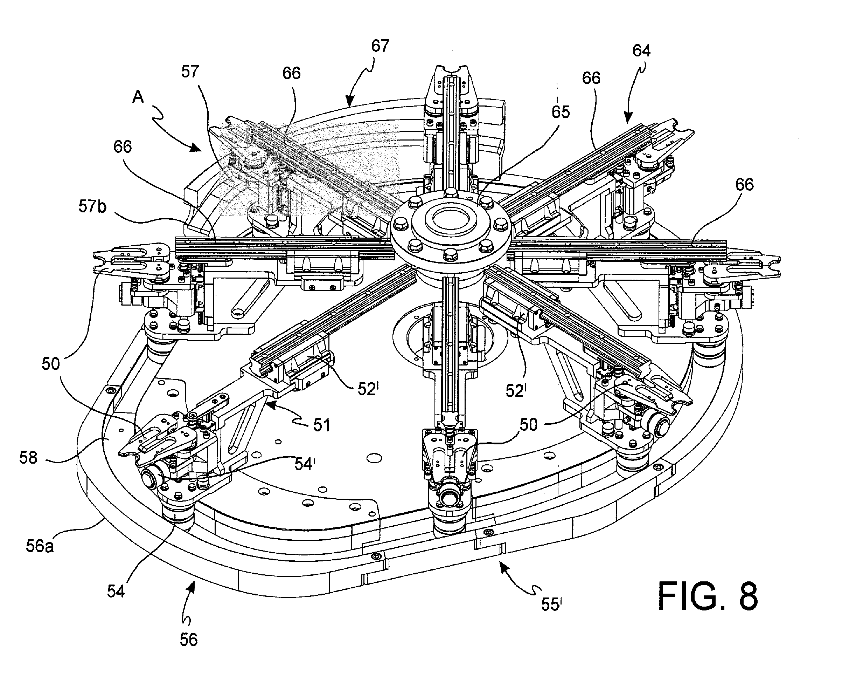

Fig. 8 shows a perspective view of the particular of the pliers support according to the invention;

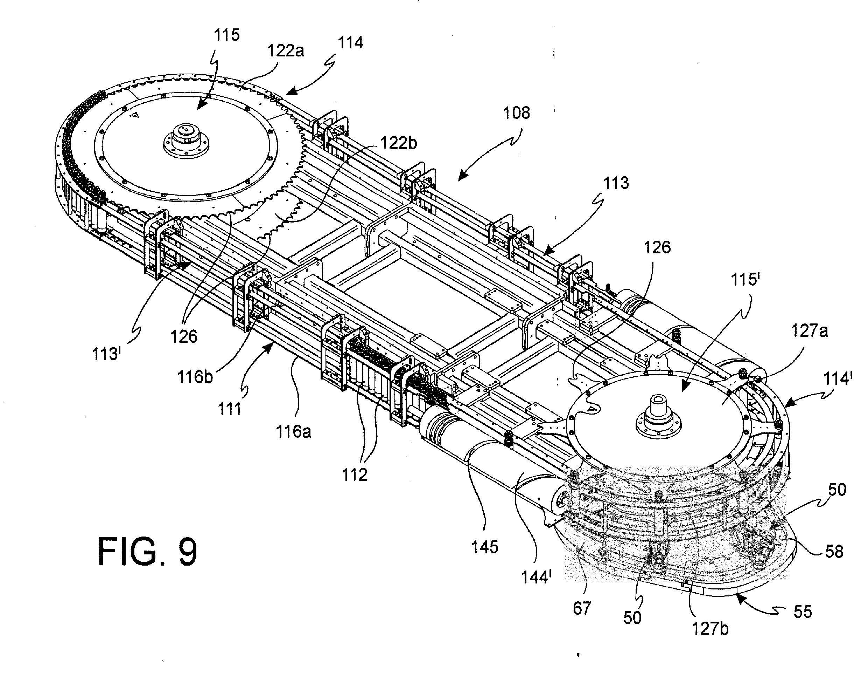

Fig. 9 shows a perspective view of a different embodiment of the system for spacing and transferring objects according to the invention;

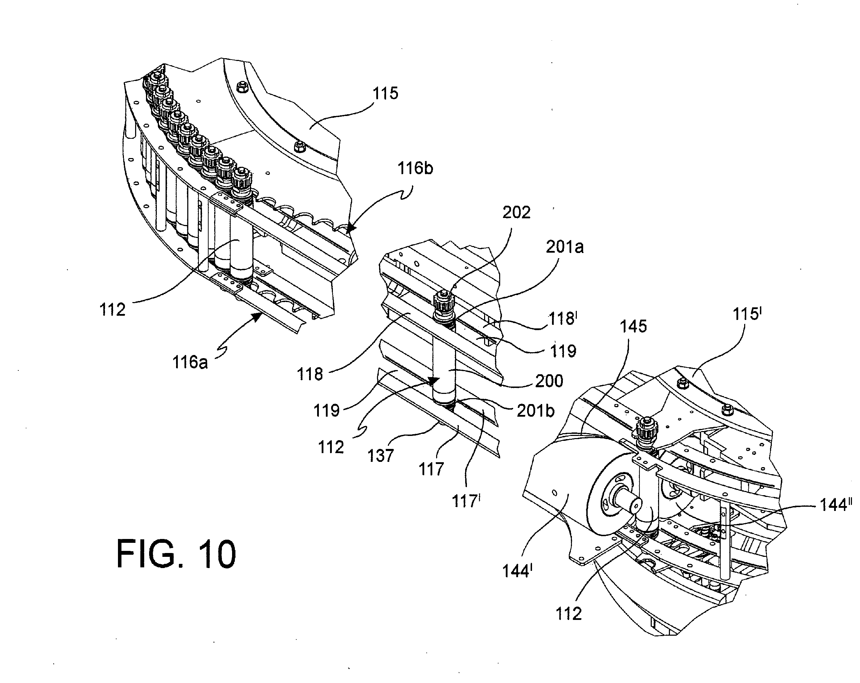

Fig. 10 shows a perspective view of a particular of the embodiment of Fig. 9;

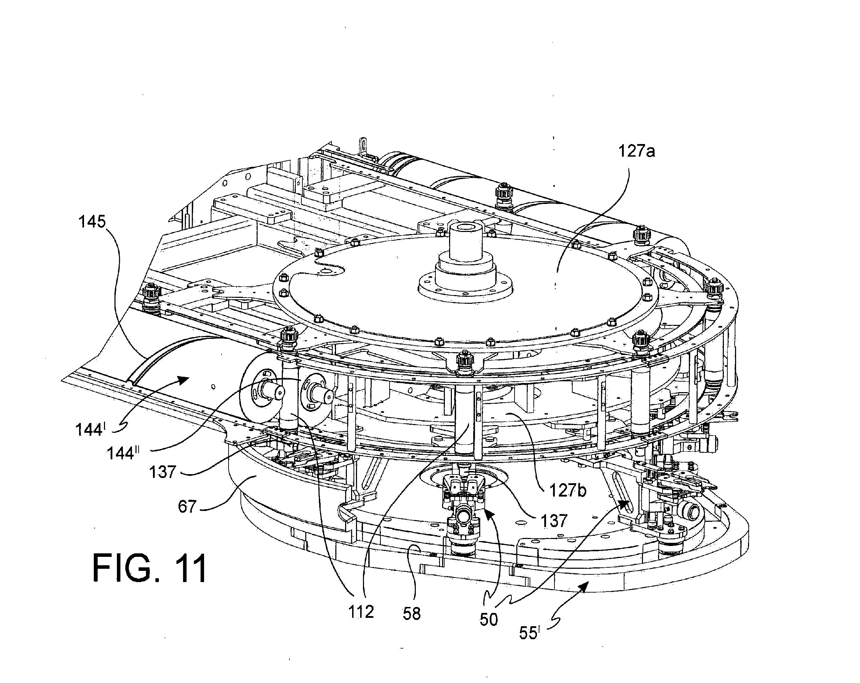

Fig. 11 shows a perspective view of a different detail of the embodiment of Fig. 9.

The following description relates to a specific embodiment of the system for spacing and transferring objects according to the invention, i.e., the application of the system to an oven for softening the preforms to be sent to a blowing machine. However, is has to be understood that the system of the invention is applicable to other equipment where it is necessary to change the pitch of objects in a predetermined path. With reference to the Figures, an oven for preforms according to an aspect of the invention is indicated with the number 1, which oven is operatively connected with handling means 2, 3 of the preforms, entering and exiting the oven 1, respectively.

Such handling means 2, 3 are typically composed of distribution stars comprising a series of gripping means 4, for example, notches or recesses, adapted to engage the preforms, for example, at the neck.

The handling means 3 for the preforms exiting the oven 1 are in turn operatively connected with a blowing machine 5 (the term "blowing machine" as used in the present description means any type of blowing or stretch-blowing machine) that comprises a plurality of moulds 6 in which the heated preform is inserted and from which it comes out in the shape of a blow molded bottle (or stretch-blown) bottle.

The blowing machine 5 is in turn operatively connected with distribution means 7, typically a distribution star, adapted to draw the blow moulded bottles exiting the blowing machine and to transfer them, by a suitable transport system, to the next operative unit. To this aim, the distribution star 7 comprises a plurality of notches 4' adapted to engage the neck of the blow moulded bottles.

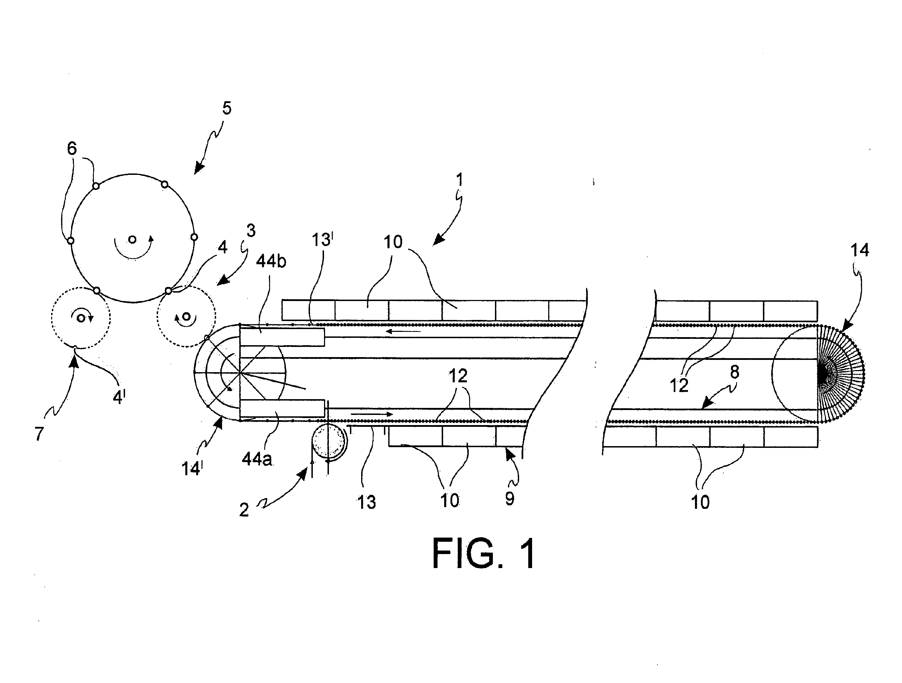

A path of the preforms is thus defined, which is indicated in Fig. 1 by the directions of the arrows, from their supply to the oven 1 to entering thereof the moulds 6 of the blowing machine 5.

The oven 1 comprises transport means 8, adapted to handle the preforms along a path inside the same oven, and heating means 9.

The heating means 9 are composed of a plurality of heating modules 10 aligned along the preform path, typically outside the transport means 8. Such heating modules 10 comprise, for example, one or more infrared lamps and suitable reflective surfaces to optimize the lamp efficiency.

The transport means 8 comprise a track 11 on which a plurality of mandrels 12 runs, each being adapted to engage a preform. The track 11 comprises two substantially parallel rectilinear lengths 13, 13' and two curvilinear lengths 14, 14', connecting at the two ends the rectilinear lengths 13, 13' according to an arc-of-circle-shaped path. Corresponding driving wheels 15, 15' are arranged at said curvilinear lengths 14, 14', as it will be best described herein below.

The track 11 comprises a pair of rails 16a, 16b arranged one above the other, each in turn divided into rectilinear lengths and curvilinear lengths at the rectilinear and curvilinear lengths 13, 13', 14, 14' of the track 11.

The rails 16a, 16b have in section a L-shaped profile, comprising a rack bar 17a, 17b forming a side of the L, and a guide bar 18a, 18b forming the other side of the L. In the track 11, the rack bars 17a, 17b of the rails 16a, 16b are facing, while the corresponding guide bars 18a, 18b extend in opposite directions on a same vertical plane.

The rack bars 17a, 17b comprise, on the rectilinear lengths 13, 13' of the track 11, a double rack profile 19 separated by a groove 20, while a single rack is present on the curvilinear lengths 14, 14'. Such single rack is made of an elastically deformable material, such as, for example, polyurethane.

The guide bars 18a, 18b have a wedge profile 21 at their top.

The first driving wheel 15 is arranged in a distal position to the feeding point of the preforms in the oven 1, while the second driving wheel 15' is arranged at the release point of the heated preforms from the oven and in a position proximal to the feeding point of the preforms into the oven.

Each driving wheels 15, 15' comprises two pairs of discs.

The first driving wheel 15 comprises a pair of lower discs 22a and a pair of upper discs 22b, arranged respectively in an lower and an upper position with respect to the rails 16a, 16b and within the curvilinear length 14 of the track 11. The two pairs of lower and upper discs 22a, 22b are associated to the same vertical shaft 23, which is mounted idle on a suitable support (not shown).

The pair of lower discs 22a comprises a first and a second discs 24, 24', the second disc 24' being spaced apart above the first disc 24, by means of suitable spacers 25, and having a diameter lower than that of the first disc 24.

Both the first and the second discs 24, 24' of the pair of lower discs 22a comprise, along the perimeter thereof, a plurality of semicircular recesses 26 arranged in sequence, so that the recesses 26 of the first disc 24 are radially aligned with the recesses 26 of the second disc 24'.

The pair of upper discs 22b comprises a first and a second discs 24", 24"', the second disc 24"' being spaced apart above the first disc 24", by means of suitable spacers 25, and having a diameter larger than that of the first disc 24". In particular, the second disc 24"' of the pair of upper discs 22b has the same diameter of the first disc 24 of the pair of lower discs 22a, while the first disc 24" of the pair of upper discs 22b has the same diameter of the second disc 24' of the pair of lower discs 22a.

Both the first and the second disc 24", 24"' of the pair of upper discs 22b comprise, along the perimeter thereof, a plurality of semicircular recesses 26 arranged in sequence, so that the recesses 26 of the first disc 24" are radially aligned with the recesses 26 of the second disc 24"' and with the recesses 26 of both the first and the second discs 24, 24' of the pair of lower discs 22a.

Similarly, the second driving wheel 15' comprises a pair of lower discs 27a and a pair of upper discs 27b, arranged in the lower and upper position, respectively, with respect to the rails 16a, 16b and within the curvilinear length 14' of the track 11. The lower 27a and upper 27 pairs of discs of the second driving wheel 15' are completely similar to those of the first driving wheel 15 described above, except in that the semicircular recesses 26 are arranged at an angular distance one to the other that corresponds to the pitch of the notches 4 of the distribution star 3 for the heated preforms.

Each of the mandrels 12 comprises a housing 28 integrally associated to a sliding support 29.

The sliding support 29 comprises a fork bar 30 with a C profile, astride the track 11. Said fork bar 30 comprises a vertical plate 30a, from the two ends of which, two arms 30b, 30c extend. Two toothed wheels 31, 31' are rotatably associated to the vertical plate 30a, which are arranged along a vertical axis between the rack bars 17a, 17b of the rails 16a, 16b, so as to mesh with one another and with the racks 19 of the corresponding bars. Each of the toothed wheels 31, 31' is composed of two coaxial toothed pinions, arranged so as to mesh together and with the double racks 19 that are present on the rectilinear lengths of the rails. Vice versa, at the curvilinear lengths, only the outermost toothed pinion meshes with the single rack (see Fig. 3).

Furthermore, two cylindrical bearings 32a, 32b are rotatably mounted on the vertical plate 30a, at the arms 30b, 30c. Said bearings 32a, 32b comprise a groove 33 arranged along the cylindrical surface thereof, adapted to engage in rotation with the corresponding guide bars 18a, 18b.

The arms 30b, 30c comprise guide means for the mandrel 12, that are adapted to engage with the recesses 26 of the discs 24, 24', 24", 24"' of the driving wheels 15, 15'.

Such guide means comprise a first pair of guide rollers 34 rotatably mounted in the proximity of the distal end of the arms 30b, 30c, and arranged so as to face one another. This first pair of guide rollers 34 is intended to interfere with the recesses 26 of the second disc 24' of the pair of lower discs 22a, 27a and with the first disc 24" of the pair of upper discs 22b, 27b of the driving wheels 15, 15'.

The guide means further comprise a second pair of guide rollers 35 rotatably mounted on opposite faces of the arms 30b, 30c, in the proximity of the connection point between the arms 30b, 30c and the vertical plate 30a. The second pair of guide rollers 35 is intended to interfere with the recesses 26 of the first disc 24 of the pair of lower discs 22a, 27a and with the second disc 24"' of the pair of upper discs 22b, 27b of the driving wheels 15, 15'.

Coaxially to the guide roller 35 arranged on the upper arm 30b, a pushing roller 36 is rotatably mounted. The function of such pushing roller 36 will be apparent in the following of the present description.

The housing 28 of the mandrel 12 houses a gripping finger 37 for a preform P (shown in Fig. 3). The gripping finger 37 has a diameter slightly lesser than the inner diameter of the preform P and comprises, on the distal portion of the outer surface thereof, an engaging portion 37' comprising in turn one or more annular reliefs 38 promoting the engagement with the inner neck of the preform. For example, such reliefs 38 are made of an elastic material, such as an elastomer, or they are composed of elastic sectors that are able to reenter or to radially expand with respect to the cylindrical surface of the gripping finger 37, exerting a holding pressure on the preform inner surface.

The gripping finger 37 further comprises a stem 39 that is inserted in the housing 28 and that is mobile vertically. A driven member 40 is associated to the stem 39, which externally protrudes from the housing 28 through a slot 41 arranged vertically on the housing 28 body. Such driven member 40 typically comprises a roller adapted to interact with a cam profile (not shown), which allows lifting or lowering the gripping finger 37, so as to disengage or engage, respectively, the inside of the preform P neck.

A coil spring 42 is arranged on the stem 39 and abuts against a shoulder 43 in the proximity of the engaging portion 37' of the gripping finger 37. Such spring 42 promotes the elastic return downwardly of the gripping finger 37.

The transport means 8 of the oven 1 further comprise handling and spacing means of the mandrels 12. Such handling means comprise a first screw 44a arranged at the feeding point of the preforms in the oven, between the driving wheel 15' and a first rectilinear length 13 of the track 11; and a second screw 44b arranged at the junction point between the second rectilinear length 13' of the track 11 and the same driving wheel 15'. Both screws 44a, 44b comprise a spiral slot 45 with variable pitch intended to interfere with the pushing roller 36 of each mandrel 12. The screws 44a, 44b are mounted in an inverted position along the running direction of the mandrels 12, so that the first screw 44a has the larger pitch upstream along the running direction, while the second screw 44b has the larger pitch downstream.

The screws 44a, 44b can be moved independently, but in a synchronized manner, by corresponding motorizations (not shown), or by a single motorization provided with a mechanical transmission.

The second driving wheel 15', which, as stated, has a structure similar to the first driving wheel 15, further comprises a plurality of pliers 50 adapted to engage the neck of the preforms P exiting the oven and to transfer them to the handling means 3.

The pliers 50 are arranged below the driving wheel 15' and are mounted on slide means 51 that allow the plier 50 extending radially with respect to the driving wheel 15'.

The slide means 51 comprise a sliding portion 52 and a support portion 53.

The sliding portion 52 comprises a closed C-shaped profile member 52' adapted to slide along a suitable guide, as it will be described herein below.

The support portion 53 comprises a partitioning element 53a protruding downwardly and at the lower end of which a base plate 53b is secured. On the lower face of the base plate, a first driven member 54 is arranged, typically a driving roller or double driving roller mounted idle with a vertical rotational axis. Furthermore, the support portion 53 houses the opening-closing mechanism of the plier 50, comprising two jaws 50a, 50b coupled so as to define a recess 60 for the object to be handled, a preform in the described case. The jaws 50a, 50b are hinged above a small plate 62 and comprise, below such small plate 62, corresponding small tabs 63 (in the drawing, only the one relative to the jaw 50b is shown) connected by elastic means 61, typically a spiral spring. The opening of the jaws 50a, 50b is opposed by said elastic means 61, so that the jaws 50a, 50b, when they are in contact with and are subjected to the pressure of the preform neck, spread apart sufficiently to receive the preform P in the recess 60, to subsequently snap close. The transferring of the preform from the plier 50 to the handling means 3 occurs in the same manner, but in an inverse direction.

The small plate 62 is secured on a housing 70, which, in turn comprises a sliding member 69 associated to a vertical guide 68 secured to the front surface of the partitioning element 53a.

The housing 70 has a hole in which a vertical support shaft 71 is inserted. The support shaft 71 is held between the base plate 53b at the bottom and a holding plate 73 at the top.

Around the support shaft 71, compression elastic means 72 are located, typically a spiral spring, abutting inferiorly against an internal shoulder of the housing 70 and superiorly on the holding plate 73. In this manner, the plier 50 can slide in the vertical direction between the base plate 53b and the holding plate 73. When the plier 50 is in the raised position, the elastic means 72 are loaded.

On the housing 70, also a second driven member 54' is secured, typically a driving roller or a double driving roller mounted idle with horizontal rotational axis, protruding outwardly of the plier 50 in the longitudinal direction.

In Fig. 8 is shown the assembly of the pliers 50 mounted on a guide structure 64.

The guide structure 64 comprises a hub 65, intended to be mounted below the driving wheel 15' so as to rotate integrally thereto, from which a plurality of guide bars 66 extends radially, on which the closed C-shaped profile members 52' of the pliers 50 are slidably mounted. The pliers 50 are thus located at a distance that corresponds to the pitch of the gripping means 4 of the handling means 3.

The support structure (not shown) of the system for spacing and transferring objects supports a first cam profile 55, 55'. The first cam profile 55, 55' is located in a fixed, yet removable, manner below the second driving wheel 15', at the corresponding curvilinear length 14' of the track 11. The cam profile 55, 55' is adapted to cooperate with the first driven member 54 of the pliers 50, determining the path thereof.

The cam profile 55, 55' comprises a curvilinear path 58 running at a lower level than the level where the first driven member 54 is located at the gripping point A of the preform P by the plier 50.

A second cam profile 67 is located at the gripping point A of the preform by the plier 50, and it is intended to cooperate with the second driven member 54' of the plier 50. The second cam profile 67 comprises an initial raised length 57a and a terminal lowered length 57b, so as to lower the plier 50 to such a level that the first driven member 54 is brought to cooperate with the curvilinear path 58 of the first cam profile 55, 55'. Such movement of the plier 50 is allowed by the sliding along the vertical guide 68. In this manner, the plier 50, once it couples the preform P, lowers, thus allowing the disengagement of the preform from the gripping finger 37 of the mandrel 12.

The cam profile 55, 55' as stated is removable, so as to be interchangeable according to the various needs.

In a first embodiment shown in Fig. 2, the cam profile 55 describes an arc of a circle with the same radius of curvature of the driving wheel 15', whereby the pliers 50 will follow the same path of the mandrels 12.

In a second embodiment, shown in Fig. 2A and 8, the cam profile 55' has at least one intermediate length with radius of curvature lower than that of the driving wheel 15', so as to form a protruding portion 56 in radial direction with respect to the driving wheel 15'. Such protruding portion 56 comprises a point of maximum extent 56a that corresponds to the position of maximum extent of the plier 50 and that is generally at the intermediate point of the path.

The operation of the system for spacing and transferring objects according to the invention, referred to the example of the oven described above, is as follows.

The preforms are fed to the oven 1 by means of the distribution star 2 shown in Fig. 1. At the feeding point, or in an upstream position, the mandrels 12, pushed by the first screw 44a and mobile in procession along the track 11 in contact with each other, interfere, through the driven member 40 thereof, with a suitable cam profile. In this manner, the gripping finger 37 is raised from the cam, then subsequently lowered, by virtue of the return by the spring 42, so as to insert in the neck of the preform P and to engage therewith. From this moment, each mandrel 12 carries a preform that is held in suspension.

Subsequently, the mandrels 12 with the preforms pass through the various heating modules 10 of the first rectilinear length 13 and, always being pushed by the first screw 44a, they are driven by the driving wheel 15 passing to the second rectilinear length 13' of the track 11, where the preforms are further heated by the other heating modules 10, until reaching the proper softening temperature of the material.

At this point, the mandrels 12 with the softened preforms, when they have reached the second screw 44b, interfere with the corresponding groove 45 through the pushing roller 36. Considered that the groove 45 has a variable increasing pitch, the mandrels 12, which come in contact to one another, are spaced by a larger pitch that corresponds to the pitch of the notches 26 of the driving wheel 15'. Such pitch can be equal to or lower than that of the notches 4 of the distribution star 3. At the point A shown in Fig. 2A, a mandrel 12 incoming, carrying a preform P, is at a plier 50, which provides to couple the preform P. The second cam profile 67 with which the second driven member 54' of the plier 50 cooperates, causes a lowering of the plier just downstream of the point A, so as to disengage the preform P from the gripping finger 37 of the mandrel 12.

Subsequently, the plier 50 carrying the preform P, moving integrally to the driving wheel 15', follows the path dictated by the first cam profile 55, 55', up to the point (not shown) in which the preform P is given by the plier 50 to the distribution star 3. This point will be usually located at the intermediate point of the path of the plier.

The path dictated by the cam profile 55, 55', as stated, varies according to the needs. In particular, in the embodiment shown in Fig. 2A, the cam profile 55' carries the plier 50 to extend up to the point 56a in which the transfer of the preform P from the plier 50 to the distribution star will occur.

In this manner, a transfer of the preform P is carried out in perfectly homokinetic conditions. In particular, the preform P is subjected to a first linear acceleration upon the spacing carried out by the screw 44b, and a second radial acceleration at the extension thereof, carried out by the plier 50 up to the transferring point 56a. Subsequently, the two components of the acceleration are divided into separate steps, and moreover they occur gradually. These operative conditions are optimal in order to reduce the mechanical stress that the softened preform P must undergo, thus preventing it from being deformed. The mandrels 12 without the preforms and spaced at the larger pitch are then driven by the driving wheel 15' up to the first screw 44a. The latter, having a groove 45 with a decreasing pitch in the running direction of the mandrels 12, brings them back to the condition of minimum pitch, and pushes them along the track 11 to be in contact with one another.

In the Figs. 9-11, a second embodiment of the system for spacing and transferring objects of the invention is shown.

The system of the invention comprises transport means 108. The transport means 108 comprise a track 111 on which a plurality of mandrels 112 runs, each being adapted to engage an object, a preform in this example. The track 111 comprises two substantially parallel rectilinear lengths 113, 113' and two curvilinear lengths 114, 114' connecting at the two ends the rectilinear lengths 113, 113' according to an arc-of-circle-shaped path. Corresponding driving wheels 115, 115' are arranged at said curvilinear lengths 114, 114', as it will be best described herein below.

The track 111 comprises a pair of vertically aligned rails 116a, 116b, each in turn being divided into rectilinear lengths and curvilinear lengths at the rectilinear and curvilinear lengths 113, 113', 114, 114' of the track 111.

Each rail 116a, 116b is formed by a pair of profiles 117, 117' , 118, 118' arranged side by side and separated by a gap 119.

The first driving wheel 115 is arranged in the distal position with respect to the feeding point of the objects in the system, while the second driving wheel 115' is arranged at the output point of the objects and in a position proximal to the feeding point of the objects in the system.

The driving wheels 115, 115' comprise an upper disc 122a, 127a and a lower disc 122b, 127b, arranged respectively in a lower and upper position with respect to the rails 116a, 116b and within the curvilinear length 114 of the track 111.

The upper 122a, 127a and lower 122b, 127b discs are associated to corresponding vertical shafts 123 mounted idle on a suitable support (not shown). Both the lower disc 122b, 127b and the upper disc 122a, 127a of the first and the second driving wheels 115, 115' comprise along the perimeter thereof a plurality of semicircular recesses 126 arranged in sequence, so that the recesses 126 in the two overlapping discs are aligned. However, in the second driving wheel 115', the semicircular recesses 126 are arranged at an angular distance one to the other that is larger and corresponding to the pitch of the gripping means 3 of the handling means 4.

Each of the mandrels 112 comprises a cylindrical body 200, at the two ends of which, an upper flange member 201a and a lower flange member 201b are arranged. Each flange member 201a, 201b defines a circular groove intended to cooperate with the pair of upper profiles 117, 117' and with the pair of lower profiles 118, 118', respectively. To this aim, the length of the cylindrical body 200 of the mandrel 112 corresponds to the distance between the lower rail 116a and the upper rail 116b, while the diameter of the circular groove is substantially corresponding to the gap 119. In this manner, the mandrel 112 is longitudinally held, and the inclination thereof in each direction is prevented. At the same time, the mandrel 112 is free to rotate idle. At the upper end of the mandrel 112, a toothed roller 202 is secured, which is intended to interact with suitable racks within the oven, so as to rotate and to subsequently allow an even distribution of the heat throughout the preform surface. In a system for spacing and transferring that is not applied to a preform oven, this member may be omitted.

The lower end of the mandrel 112 comprises a gripping finger 137, completely similar to that described above with reference to the first embodiment. The gripping finger 137 is, for example, adapted to interfere with the neck of a preform, but it will be able to be replaced in other applications by da suitable engaging means.

The transport means 108 further comprise handling and spacing means of the mandrels 112. Such handling and spacing means comprise at least one pair of screws 144', 144" arranged at the junction point between the second rectilinear length 113' of the track 111 and the driving wheel 115'.

The two screws 144', 144" are arranged side by side, but they are arranged on planes that are offset in height, so that the superiorly arranged one interacts with the cylindrical body 200 of the mandrel 112 below the pair of profiles 118, 118', while the inferiorly arranged one interacts with the same cylindrical body 200 of the mandrel 112 above the pair of profiles 117, 117', so that, during the accelerative transients, the mandrel 112 is stabilized in all directions due to the action of the combined constraint of the screws and of a portion of the guide 118 and 117. To this aim, the distance between the reactive surfaces of the two screws 144', 144" substantially corresponds to the diameter of said flange members 201a, 201b of the mandrel 112.

Both screws 144', 144" comprise a spiral slot 145 with variable pitch composing the screw reactive surface. Both screws 144', 144" have the larger pitch downstream along the running direction.

The screws 144', 144" can be moved independently, but in a synchronized manner by corresponding motorizations (not shown), or by a single motorization provided with a mechanical transmission.

A second pair of screws can be present at the feeding point of the objects in the transport means 108, i.e., between the driving wheel 115' and the first rectilinear length 113.

A plurality of pliers 50 is associated to the driving wheel 115', which pliers are mobile along a cam profile 55, 55' completely similar to that described with reference to the first embodiment, to which complete reference is made.

Although the above-described embodiments of the invention have been provided for handling, spacing and transferring of preforms heated within a oven, typically an infrared oven for preforms, it shall be apparent that the system for spacing and transferring that is the object of the invention can be applied to other equipment that require to handle object and to distance them at a preset pitch, there being applications that are generally known in the packaging field.

Therefore, an object of the present invention is a system as defined in claim 1. A further object of the invention is a method as defined in claim 18.

With the term "gradual linear acceleration" or "gradual radial acceleration" is meant a non-instantaneous linear or radial acceleration, i.e. which occurs in a time lapse that is sufficiently long as not to cause a dynamic stress to the transported object.

In a preferred embodiment, the handling means 3 are a distribution star and the objects are preforms or containers.

The advantages of this solution are many.

First of all, the described system allows maximizing the efficiency of the transport means and reducing to a minimum the overall dimensions, since the mandrels proceed in contact to one another, thus at the minimum possible distance. When applied to a preform oven, the heat dispersion is reduced to a minimum and energy efficiency is maximized.

Furthermore, the mandrels 12 are not directly connected to transport means, but they are pushed by the two screws 44a, 44b. This allows a considerable simplification of the machine and saving in costs and maintenance times.

On the other hand, the guide system that comprises the toothed wheels 31, 31' engaging on the double rack bars 17a, 17b, as well as the guide rollers 34, 35 intended to engage with the recesses 26 of the driving wheels 15, 15', allows an efficient control of the mandrels 12 position, throughout the path, with respect to longitudinal or transversal oscillations thereabout of the same mandrel.

The bearings 32a, 32b sliding on the corresponding guide bars 18a, 18b also concur to maintain the proper position of the mandrels 12.

The fact that the cam profile 55, 55' is interchangeable, allows carrying out an homokinetic transferring as described above, independently from the pitch, the dimension, or the rotation speed of the distribution star intended to receive and transfer the objects, specifically the heated preforms, simply suitably selecting the path.

This allows avoiding the deformation of the preforms that, as stated above, may have undesired effects on the final result of the blowing operation.

The advantages of an homokinetic transferring of the objects and the spacing thereof in the absence of accelerative stresses, by virtue of the fact of separating the linear acceleration from the radial acceleration, and by virtue of the fact that such accelerations occur gradually, is a further important advantage of the system of the invention.

It shall be apparent that only some particular embodiments of the present invention have been described, to which those skilled in the art will be able to make all those modifications that are necessary for the adaption thereof to particular applications, without for this departing from the protection scope of the present invention as defined by the appended claims.

For example, in an embodiment, the bearings 32a, 32b and the corresponding guide bars 18a, 18b can also be eliminated, without for this noticeably compromise the stability of the mandrels 12.

## Claims

1. A system for spacing and transferring of objects advancing in procession on transport means (8, 108) along a track (11, 111) from a minimum pitch to a preset pitch larger than said minimum pitch, and for transferring said spaced objects to handling means (3), wherein said system comprises a driving wheel (15', 115'), said driving wheel (15', 115') comprising a plurality of recesses (26, 126) for driving a plurality of mandrels (12, 112), each mandrel (12, 112) carrying one of said objects, the recesses (26, 126) being spaced by a pitch larger than said minimum pitch of the objects in the transport means (8, 108), said pitch of the recesses (26, 126) being equal to or lower than said preset pitch, **characterized in that** the system comprises:
- handling and spacing means (44b; 144', 144") of the mandrels (12, 112) carrying the objects from said minimum pitch to a pitch substantially corresponding to the pitch of the recesses (26, 126), the said handling and spacing means (44b; 144', 144") being arranged at the junction point between a rectilinear length (13', 113') of the track (11, 111) and the driving wheel (15', 115'); and
- a plurality of pliers (50) that are mounted on a guide structure (64) arranged below the driving wheel (15', 115') and rotating integrally thereto, the pliers (50) being radially extendible from the driving wheel (15', 115'), said pliers (50) being driven by a cam profile (55, 55') that determines the path of said pliers (50), said pliers (50) being adapted to engage the said objects carried by the mandrels (12, 112) and to transfer the objects to said handling means (3).

2. The system according to claim 1, wherein said objects are preforms (P) transported by mandrels (12, 112), and wherein said transport means (8, 108) are located in an oven (1) for heating and treating the thermal profile of preforms (P).

3. The system according to claim 1 or 2, wherein the pliers (50) are mounted on slide means (51) allowing the plier (50) to radially extend with respect to the driving wheel (15', 115').

4. The system according to claim 3, wherein the guide structure (64) comprises a hub (65), intended to be mounted below the driving wheel (15') so as to rotate integrally thereto, from which a plurality of guide bars (66) radiates; and wherein the slide means (51) comprise a sliding portion (52) and a support portion (53), the sliding portion (52) comprising a closed C-shaped profile member (52') adapted to slide along one of said guide bars (66); and wherein the support portion (53) comprises a driven member (54).

5. The system according to claim 4, wherein said driven member (54) is a driving roller mounted idle with a vertical rotational axis.

6. The system according to any of claims 3 to 5, wherein said pliers (50) are mobile vertically with respect to said slide means (51), wherein the plier (50) is associated to a member (69) sliding in a vertical guide (68) secured to the support portion (53), so that the plier (50) can slide vertically abutting against compression elastic means (72); and wherein the plier (50) comprises a second driven member (54') protruding outwardly of the plier (50) in the longitudinal direction.

7. The system according to claim 6, wherein the second driven member (54') is a one or a double driving roller mounted idle with a horizontal rotational axis.

8. The system according to any one of the claims 1 to 7, wherein a first cam profile (55, 55') is located in a fixed, yet removable, manner below the second driving wheel (15', 115'), said first cam profile (55, 55') being adapted to cooperate with the first driven member (54) of the pliers (50).

9. The system according to claim 8, wherein said first cam profile (55, 55') comprises a curvilinear path (58) running at a lower level than the level in which the first driven member (54) is located at the gripping point (A) of an object by the plier (50).

10. The system according to any one of the claims 1 to 9, wherein the first cam profile (55) describes an arc of a circle with the same radius of curvature of the driving wheel (15', 115'); or wherein the first cam profile (55') has at least one intermediate length with a radius of curvature lower than that of the driving wheel (15', 115'), so as to form a protruded portion (56) in the radial direction with respect to the driving wheel (15', 115'), said protruding portion (56) comprising a point of maximum extent (56a) corresponding to the position of maximum extent of the plier (50) at the transferring point of the object from the oven to the handling means (3).

11. The system according to any one of the claims 1 to 10, comprising a second cam profile (67) located at the gripping point (A) of an object by a plier (50), said second cam profile (67) being intended to cooperate with the second driven member (54') of the plier (50), wherein the second cam profile (67) comprises an initial raised length (57a) and a terminal lowered length (57b), so as to lower the plier (50) to such a level that the first driven member (54) is brought to cooperate with the curvilinear path (58) of the first cam profile (55, 55').

12. The system according to claim 1, wherein the track (11) comprises a pair of rails (16a, 16b) arranged one above the other, wherein the rails (16a, 16b) comprise rack bars (17a, 17b) facing one another.

13. The system according to claim 12, wherein each of the mandrels (12) comprises a housing (28) integrally associated to a sliding support (29), the sliding support (29) comprising a fork bar (30) with a C-shaped profile astride the track (11), and comprises two toothed wheels (31, 31'), arranged along a vertical axis between the rack bars (17a, 17b) of the rails (16a, 16b), so as to mesh with one another and with the racks (19) of the corresponding bars, and wherein each of the toothed wheels (31, 31') is composed of two coaxial toothed pinions, arranged so as to mesh with the double racks (19) that are present on the rectilinear lengths of the rails.

14. The system according to any one of the claims 1 to 11, wherein the track (111) comprises two substantially parallel rectilinear lengths (113, 113') and two curvilinear lengths (114, 114') connecting at the two ends the rectilinear lengths (113, 113') according to an arc-of-circle-shaped path, corresponding driving wheels (115, 115') being arranged at said curvilinear lengths (114, 114').

15. The system according to claim 14, wherein the track (111) comprises a pair of vertically aligned rails (116a, 116b), each in turn being divided into rectilinear lengths and curvilinear lengths at the rectilinear and curvilinear lengths (113, 113', 114, 114') of the track (111), each rail (116a, 116b) being formed by a pair of profiles (117, 117', 118, 118') that are arranged side by side and separated by a gap (119).

16. The system according to claim 14 or 15, wherein each of the mandrels (112) comprises a cylindrical body (200), at the two ends of which an upper flange member (201a) and a lower flange member (201b) are arranged, wherein each flange member (201a, 201b) defines a circular groove intended to cooperate with the pair of lower profiles (117, 117') and with the pair of upper profiles (118, 118'), respectively, the diameter of the circular groove being substantially corresponding to the gap (119); the lower end of the mandrel (112) further comprising a gripping finger (137).

17. The system according to any one of the claims 14 to 16, wherein said handling and spacing means (144', 144") of the objects comprise a pair of screws (144', 144") arranged at the junction point between the second rectilinear length (113') of the track (111) and the driving wheel (115'), the screws (144', 144") comprising a spiral slot (145) having a variable pitch composing the reactive surface of the screw having the larger pitch downstream along the running direction; wherein said screws (144', 144") are arranged side by side, but on planes that are offset in height, so that the superiorly arranged one interacts with the cylindrical body (200) of the mandrel (112) below the pair of upper profiles (118, 118'), while the inferiorly arranged one interacts with the same cylindrical body (200) above the pair of lower profiles (117, 117').

18. A method using the system of claim 1 for spacing objects advancing in procession on transport means (8, 108) from a minimum pitch to a preset pitch larger than said minimum pitch and for transferring said spaced objects to handling means (3), comprising:
- a linear spacing step along said transport means (8, 108), wherein an object is subjected to a gradual linear acceleration,
- a radial spacing step along said transport means (8, 108) between a first circumference and a second circumference having a radius that is larger than or equal to said first circumference, wherein said object is subjected to a gradual radial acceleration,
- a transferring step from said transport means (8, 108) to said handling means (3), wherein said transferring occurs in homokinetic conditions.

## Patentansprüche

1. System zur Beabstandung und Übergabe von Objekten, welche sich in Abfolge auf einem Transportmittel (8, 108) entlang einer Strecke vorwärts bewegen (11, 111), von einem minimalen Abstand zu einem vorbestimmten Abstand, welcher größer ist als der minimale Abstand, und zum Übergeben der beabstandeten Objekte an ein Behandlungsmittel (3), wobei das System ein Antriebsrad (15', 115') umfasst, wobei das Antriebsrad (15', 115') eine Mehrzahl von Ausnehmungen (26, 126) umfasst, um eine Mehrzahl von Dornen (12, 112) anzutreiben, wobei jeder Dorn (12, 112) eines der Objekte trägt, wobei die Ausnehmungen (26, 126) durch einen Abstand beabstandet sind, welcher größer ist als der minimale Abstand der Objekte in dem Transportmittel (8, 108), wobei der Abstand der Ausnehmungen (26, 126) kleiner oder gleich dem vorbestimmten Abstand ist, **dadurch gekennzeichnet, dass** das System umfasst:
- ein Behandlungs- und Beabstandungsmittel (44b; 144', 144") der Dornen (12, 112), welche die Objekte von dem minimalen Abstand zu einem Abstand tragen, welcher im Wesentlichen dem Abstand der Ausnehmungen (26, 126) entspricht, wobei das Behandlungs- und Beabstandungsmittel (44b; 144', 144") an dem Verbindungspunkt zwischen einer geradlinigen Länge (13', 113') der Strecke (11, 111) und des Antriebsrads (15', 115') angeordnet ist; und
- eine Mehrzahl von Zangen (50), welche an einer Führungsstruktur (64) angebracht ist, welche unterhalb des Antriebsrads (15', 115') angeordnet ist und damit integral rotiert, wobei die Zangen (50) von dem Antriebsrad (15', 115') radial erweiterbar sind, wobei die Zangen (50) durch ein Nockenprofil (55, 55') angetrieben sind, welches den Weg der Zangen (50) bestimmt, wobei die Zangen (50) dazu eingerichtet sind, mit den Objekten, welche durch die Dornen (12, 112) getragen werden, einzugreifen und die Objekte an das Behandlungsmittel (3) zu übergeben.

2. System nach Anspruch 1, wobei die Objekte Vorformen (P) sind, welche durch Dornen (12, 112) transportiert werden, und wobei das Transportmittel (8, 108) in einem Ofen (1) zum Heizen und Behandeln der thermalen Profile von Vorformen (P) angeordnet ist.

3. System nach Anspruch 1 oder 2, wobei die Zangen (50) an einem Rutschmittel (51) angebracht sind, welches der Zange (50) erlaubt, sich in Bezug auf das Antriebsrad (15', 115') radial zu erweitern.

4. System nach Anspruch 3, wobei die Führungsstruktur (64) eine Nabe (65) umfasst, welche dazu bestimmt ist, unterhalb des Antriebsrads (15') angebracht zu sein, um integral damit zu rotieren, von welchem eine Mehrzahl von Führungsstangen (66) ausstrahlt; und wobei das Rutschmittel (51) einen Rutschabschnitt (52) und einen Halterungsabschnitt (53) umfasst, wobei der Rutschabschnitt (52) ein geschlossenes C-förmiges Profilelement (52') umfasst, welches dazu eingerichtet ist, entlang einer der Führungsstangen (66) zu rutschen; und wobei der Halterungsabschnitt (53) ein angetriebenes Element (54) umfasst.

5. System nach Anspruch 4, wobei das angetriebene Element (54) eine Antriebsrolle ist, welche mit einer vertikalen Rotationsachse leerlaufend angebracht ist.

6. System nach einem der Ansprüche 3 bis 5, wobei die Zangen (50) in Bezug auf das Rutschmittel (51) vertikal beweglich sind, wobei die Zange (50) einem Element (69) zugeordnet ist, welches in einer vertikalen Führung (68) rutscht, welche an dem Halterungsabschnitt (53) befestigt ist, so dass die Zange (50) vertikal rutschen kann, wobei sie gegen ein elastisches Kompressionsmittel (72) anliegt; und wobei die Zange (50) ein zweites angetriebenes Element (54') umfasst, welches von der Zange (50) in der Längsrichtung nach außen vorsteht.

7. System nach Anspruch 6, wobei das zweite angetriebene Element (54') eine Einfach- oder eine Doppelantriebsrolle ist, welche mit einer horizontalen Rotationsachse leerlaufend angebracht ist.

8. System nach einem der Ansprüche 1 bis 7, wobei ein erstes Nockenprofil (55, 55') in einer befestigten, jedoch entfernbaren, Weise unterhalb des zweiten Antriebsrads (15', 115') angeordnet ist, wobei das erste Nockenprofil (55, 55') dazu eingerichtet ist, mit dem ersten angetriebenen Element (54) der Zangen (50) zusammen zu wirken.

9. System nach Anspruch 8, wobei das erste Nockenprofil (55, 55') einen kurvenförmigen Weg (58) umfasst, welcher auf einem niedrigeren Niveau verläuft als das Niveau, in welchem das erste angetriebene Element (54) an dem Greifpunkt (A) eines Objekts durch die Zange (50) angeordnet ist.

10. System nach einem der Ansprüche 1 bis 9, wobei das erste Nockenprofil (55) einen Kreisbogen mit dem gleichen Krümmungsradius wie das Antriebsrad (15', 115') beschreibt; oder wobei das erste Nockenprofil (55') wenigstens eine Zwischenlänge mit einem Krümmungsradius aufweist, welcher geringer ist als der des Antriebsrads (15', 115'), um einen vorstehenden Abschnitt (56) in der radialen Richtung in Bezug auf das Antriebsrad (15', 115') zu bilden, wobei der vorstehende Abschnitt (56) einen Punkt maximaler Erweiterung (56a) umfasst, welcher der Position maximaler Erweiterung der Zange (50) an dem Übergabepunkt des Objekts von dem Ofen an das Behandlungsmittel (3) entspricht.

11. System nach einem der Ansprüche 1 bis 10, umfassend ein zweites Nockenprofil (67), welches an dem Greifpunkt (A) eines Objekts durch eine Zange (50) angeordnet ist, wobei das zweite Nockenprofil (67) dazu bestimmt ist, mit dem zweiten angetriebenen Element (54') der Zange (50) zusammen zu wirken, wobei das zweite Nockenprofil (67) eine anfängliche angehobene Länge (57a) und eine abschließende abgesenkte Länge (57b) umfasst, um die Zange (50) auf ein solches Niveau abzusenken, dass das erste angetriebene Element (54) mit dem kurvenförmigen Weg (58) des ersten Nockenprofils (55, 55') in Zusammenwirkung gebracht wird.

12. System nach Anspruch 1, wobei die Strecke (11) ein Paar von Schienen (16a, 16b) umfasst, welche übereinander angeordnet sind, wobei die Schienen (16a, 16b) Gestellstangen (17a, 17b) umfassen, welche aufeinanderzu gerichtet sind.

13. System nach Anspruch 12, wobei jeder der Dornen (12) ein Gehäuse (28) umfasst, welches einer Rutschhalterung (29) integral zugeordnet ist, wobei die Rutschhalterung (29) eine Gabelstange (30) mit einem C-förmigen Profil rittlings der Strecke (11) umfasst, und zwei gezahnte Räder (31, 31') umfasst, welche entlang einer vertikalen Achse zwischen den Gestellstangen (17a, 17b) der Schienen (16a, 16b) angeordnet sind, um ineinander und mit den Gestellen (19) der entsprechenden Stangen einzugreifen, und wobei jedes der gezahnten Räder (31, 31') aus zwei koaxialen gezahnten Ritzeln besteht, welche dazu eingerichtet sind, um mit den Doppelgestellen (19) einzugreifen, welche an den geradlinigen Längen der Schienen vorliegen.

14. System nach einem der Ansprüche 1 bis 11, wobei die Strecke (111) zwei im Wesentlichen parallele geradlinige Längen (113, 113') und zwei kurvenförmige Längen (114, 114') umfasst, welche an den zwei Enden der geradlinigen Längen (113, 113') gemäß einem kreisbogenförmigen Weg verbunden sind, wobei entsprechende Antriebsräder (115, 115') an den kurvenförmigen Längen (114, 114') angeordnet sind.

15. System nach Anspruch 14, wobei die Strecke (111) ein Paar von vertikal ausgerichtete Schienen (116a, 116b) umfasst, wobei jede wiederum in geradlinige Längen und kurvenförmige Längen an den geradlinigen und kurvenförmigen Längen (113, 113', 114, 114') der Strecke (111) unterteilt ist, wobei jede Schiene (116a, 116b) aus einem Paar von Profilen (117, 117', 118, 118') gebildet ist, welche nebeneinander und durch einen Spalt (119) getrennt angeordnet sind.

16. System nach Anspruch 14 oder 15, wobei jeder der Dornen (112) einen zylindrischen Körper (200) umfasst, an dessen beiden Enden ein oberes Flanschelement (201 a) und ein unteres Flanschelement (201 b) angeordnet sind, wobei jedes Flanschelement (201 a, 201 b) eine kreisförmige Nut definiert, welche dazu bestimmt ist, mit dem Paar von unteren Profilen (117, 117') bzw. mit dem Paar von oberen Profilen (118, 118') zusammenzuwirken, wobei der Durchmesser der kreisförmigen Nut im Wesentlichen dem Spalt (119) entspricht; wobei das untere Ende des Dorns (112) ferner einen Greiffinger (137) umfasst.

17. System nach einem der Ansprüche 14 bis 16, wobei das Behandlungs- und Beabstandungsmittel (144', 144") der Objekte ein Paar von Schrauben (144', 144") umfasst, welche an dem Verbindungspunkt zwischen der zweiten geradlinigen Länge (113') der Strecke (111) und dem Antriebsrad (115') angeordnet sind, wobei die Schrauben (144', 144") einen Spiralschlitz (145) umfassen, welcher einen variablen Abstand aufweist, welcher die reaktive Fläche der Schraube bildet, welche den größeren Abstand abwärts entlang der Laufrichtung aufweist; wobei die Schrauben (144', 144") nebeneinander angeordnet sind, aber in Ebenen, welche von unterschiedlicher Höhe sind, so dass die weiter oben angeordnete mit dem zylindrischen Körper (200) des Dorns (112) unterhalb des Paars von oberen Profilen (118, 118') wechselwirkt, während die weiter unten angeordnete mit dem gleichen zylindrischen Körper (200) oberhalb des Paares von unteren Profilen (117, 117') wechselwirkt.

18. Verfahren unter Verwendung des Systems nach Anspruch 1 zum Beabstanden von Objekten, welche sich in Prozession auf einem Transportmittel (8, 108) von einem minimalen Abstand zu einem vorbestimmten Abstand, welcher größer ist als der minimale Abstand, fortbewegen und zum Übergeben der beabstandeten Objekte an ein Behandlungsmittel (3), umfassend:
- einen Linear-Beabstandungs-Schritt entlang des Transportmittels (8, 108), wobei ein Objekt einer allmählichen linearen Beschleunigung ausgesetzt wird,
- einen Radial-Beabstandungs-Schritt entlang dem Transportmittel (8, 108) zwischen einem ersten Umfang und einem zweiten Umfang, welcher einen Radius aufweist, der größer oder gleich dem ersten Umfang ist, wobei das Objekt einer allmählichen Radialbeschleunigung ausgesetzt wird,
- einen Übergabe-Schritt von dem Transportmittel (8, 108) an das Behandlungsmittel (3), wobei die Übergabe unter homokinetischen Bedingungen stattfindet.

## Revendications

1. Système d'espacement et de transfert d'objets avançant en file sur des moyens de transport (8, 108) le long d'une piste (11, 111) d'un espacement minimal à un espacement prédéfini supérieur audit espacement minimal et pour transférer lesdits objets espacés vers des moyens de manutention (3), dans lequel ledit système comprend une roue d'entraînement (15', 115'), ladite roue d'entraînement (15', 115') comprenant un ensemble de renfoncements (26, 126) pour entraîner un ensemble de mandrins (12, 112), chaque mandrin (12, 112) portant un desdits objets, les renfoncements (26, 126) étant séparés par un espacement supérieur audit espacement minimal des objets dans les moyens de transport (8, 108), ledit espacement des renfoncements (26, 126) étant inférieur ou égal audit espacement prédéfini, **caractérisé en ce que** le système comprend :
- des moyens de manipulation et d'espacement (44b ; 144', 144") des mandrins (12, 112) transportant les objets dudit espacement minimal à un espacement sensiblement égal à l'espacement des renfoncements (26, 126), lesdits moyens de manipulation et d'espacement (44b ; 144', 144") étant installés au point de jonction entre une longueur rectiligne (13', 113') de la piste (11, 111) et la roue d'entraînement (15', 115') et
- un ensemble de pinces (50) montées sur une structure de guidage (64) située sous la roue d'entraînement (15', 115') et liées en rotation à cette roue, les pinces (50) étant télescopiques à partir de la roue d'entraînement (15', 115'), lesdites pinces (50) étant entraînées par un profil de came (55, 55') qui définit la trajectoire desdites pinces (50), lesdites pinces (50) étant adaptées pour saisir lesdits objets transportés par les mandrins (12, 112) et pour transférer les objets vers lesdits moyens de manutention (3).

2. Système selon la revendication 1, dans lequel lesdits objets sont des préformes (P) transportées par les mandrins (12, 112) et dans lequel lesdits moyens de transport (8, 108) sont situés dans un four (1) pour le chauffage et le traitement du profil thermique des préformes (P).

3. Système selon la revendication 1 ou 2, dans lequel les pinces (50) sont montées sur des dispositifs coulissants (51) permettant à la pince (50) de se déployer radialement par rapport à la roue d'entraînement (15', 115').

4. Système selon la revendication 3, dans lequel la structure de guidage (64) comprend un moyeu (65), destiné à être monté sous la roue d'entraînement (15') de manière à y être lié en rotation, à partir duquel rayonne un ensemble de barres de guidage (66) et dans lequel les dispositifs coulissants (51) comprennent une partie coulissante (52) et une partie d'appui (53), la partie coulissante (52) comprenant un profilé fermé en C (52') adapté pour coulisser le long d'une desdites barres de guidage (66) et dans lequel la partie d'appui (53) comprend un élément entraîné (54).

5. Système selon la revendication 4, dans lequel ledit élément entraîné (54) est un rouleau d'entraînement monté libre avec un axe de rotation vertical.

6. Système selon une des revendications 3 à 5, dans lequel lesdites pinces (50) sont mobiles verticalement par rapport auxdits dispositifs coulissants (51), dans lequel la pince (50) est associée à un élément (69) coulissant dans un guide vertical (68) fixé sur la partie d'appui (53), de telle manière que la pince (50) peut coulisser verticalement en venant en butée contre des moyens de compression élastiques (72) et dans lequel la pince (50) comprend un deuxième élément entraîné (54') faisant saillie vers l'extérieur de la pince (50) dans la direction longitudinale.

7. Système selon la revendication 6, dans lequel le deuxième élément entraîné (54') est un rouleau d'entraînement simple ou double monté libre avec un axe de rotation horizontal.

8. Système selon une des revendications 1 à 7, dans lequel un premier profil de came (55, 55') est situé de manière fixe mais amovible sous la deuxième roue d'entraînement (15', 115'), ledit premier profil de came (55, 55') étant adapté pour être solidaire du premier élément entraîné (54) des pinces (50).

9. Système selon la revendication 8, dans lequel ledit premier profil de came (55, 55') comprend une piste curviligne (58) située à un niveau inférieur au niveau du premier élément entraîné (54) au point de préhension (A) d'un objet par la pince (50).

10. Système selon une des revendications 1 à 9, dans lequel le premier profil de came (55) décrit un arc de cercle ayant le même rayon de courbure que la roue d'entraînement (15', 115') ou dans lequel le premier profil de came (55') possède au moins une longueur intermédiaire d'un rayon de courbure inférieur à celui de la roue d'entraînement (15', 115'), de manière à former une partie en saillie (56) dans la direction radiale par rapport à la roue d'entraînement (15', 115'), ladite partie en saillie (56) comprenant un point de saillie maximal (56a) correspondant à la position de la saillie maximale de la pince (50) au point de transfert de l'objet entre le four et les moyens de manutention (3).

11. Système selon une des revendications 1 à 10, comprenant un deuxième profil de came (67) situé au point de préhension (A) d'un objet par une pince (50), ledit deuxième profil de came (67) étant prévu pour fonctionner solidairement avec le deuxième élément entraîné (54') de la pince (50),
dans lequel le deuxième profil de came (67) comprend une longueur initiale relevée (57a) et une longueur terminale abaissée (57b), de manière à abaisser la pince (50) à un niveau tel que le premier élément entraîné (54) est solidaire de la piste curviligne (58) du premier profil de came (55, 55').

12. Système selon la revendication 1, dans lequel la piste (11) comprend une paire de rails (16a, 16b) superposés, dans lequel les rails (16a, 16b) comprennent des crémaillères (17a, 17b) qui se font face.

13. Système selon la revendication 12, dans lequel chacun des mandrins (12) comprend un logement (28) intégralement associé à un support coulissant (29), le support coulissant (29) comprenant une barre à fourche (30) avec un profilé en C chevauchant la piste (11), et comprend deux roues dentées (31, 31'), disposées sur un axe vertical entre les crémaillères (17a, 17b) des rails (16a, 16b), de manière à s'engrener entre eux et avec les crémaillères (19) des barres correspondantes, et dans lequel chacune des roues dentées (31, 31') est composée de deux pignons dentés coaxiaux, disposés de manière à s'engrener avec les crémaillères doubles (19) présentes sur les longueurs rectilignes des rails.

14. Système selon une des revendications 1 à 11, dans lequel la piste (111) comprend deux longueurs rectilignes sensiblement parallèles (113, 113') et deux longueurs curvilignes (114, 114') raccordées aux deux extrémités aux longueurs rectilignes (113, 113') suivant une piste en arc de cercle, les roues d'entraînement (115, 115') correspondantes étant montées auxdites longueurs curvilignes (114, 114').

15. Système selon la revendication 14, dans lequel la piste (111) comprend une paire de rails alignés verticalement (116a, 116b), chacun étant divisé en longueurs rectilignes et longueurs curvilignes aux longueurs rectilignes et curvilignes (113, 113', 114, 114') de la piste (111), chaque rail (116a, 116b) étant constitué d'une paire de profilés (117, 117', 118, 118') situés côte à côte et séparés par un espace (119).

16. Système selon la revendication 14 ou 15, dans lequel chacun des mandrins (112) comprend un corps cylindrique (200), aux deux extrémités duquel sont présents un flasque supérieur (201a) et un flasque inférieur (201b), dans lequel chaque flasque (201a, 201b) définit une rainure circulaire destinée à être associée respectivement à la paire de profilés inférieurs (117, 117') et à la paire de profilés supérieurs (118, 118'), le diamètre de la rainure circulaire étant sensiblement identique à l'espace (119), l'extrémité inférieure du mandrin (112) comprenant en outre un doigt de préhension (137).

17. Système selon une des revendications 14 à 16, dans lequel lesdits moyens de manipulation et d'espacement (144', 144") des objets comprennent une paire de vis (144', 144") installées au point de jonction entre la deuxième longueur rectiligne (113') de la piste (111) et la roue d'entraînement (115'), les vis (144', 144") comprenant une fente en spirale (145) possédant un pas variable composant la surface réactive de la vis qui a le pas le plus grand en aval suivant le sens de défilement, dans lequel lesdites vis (144', 144") sont situées côte à côte mais sur des plans décalés en hauteur, de telle sorte que la vis haute interagit avec le corps cylindrique (200) du mandrin (112) en-dessous de la paire de profilés supérieurs (118, 118'), alors que la vis basse interagit avec le même corps cylindrique (200) au-dessus de la paire de profilés inférieurs (117, 117').

18. Méthode utilisant le système de la revendication 1 pour l'espacement d'objets avançant en file sur des moyens de transport (8, 108) d'un espacement minimal à un espacement prédéfini supérieur audit espacement minimal et pour le transfert desdits objets espacés vers des moyens de manutention (3), comprenant :
- une étape d'espacement linéaire le long desdits moyens de transport (8, 108), dans laquelle un objet est soumis à une accélération linéaire progressive,
- une étape d'espacement radial le long desdits moyens de transport (8, 108) entre une première circonférence et une deuxième circonférence possédant un rayon supérieur ou égal à ladite première circonférence, dans laquelle ledit objet est soumis à une accélération radiale progressive,
- une étape de transfert desdits moyens de transport (8, 108) auxdits moyens de manutention (3), dans laquelle ledit transfert s'effectue dans des conditions homocinétiques.
